# EUROPEAN PATENT APPLICATION

(11) **EP 0 973 276 A2**
(43) Date of publication of application: **19.01.2000**
(21) Application number: 99113155.8
(22) Date of filing: 07.07.1999
(51) Int. Cl.: H04B 10/152

(54) **Gain equalizer and optical amplifying transmission line**

(30) Priority: 16.07.1998 JP 20142298
(71) Applicant: KDD Corporation, Tokyo (JP); KDD Submarine Cable Systems Inc., Tokyo (JP)
(72) Inventor: Takeda, Noriyuki, 2-1-15 Ohara, Kamifukuoka-shi, Saitama (JP); Edagawa, Noboru, 2-1-15 Ohara, Kamifukuoka-shi, Saitama (JP); Suzuki,Masatoshi, 2-1-15 Ohara, Kamifukuoka-shi, Saitama (JP)
(74) Representative: Schaumburg, Thoenes & Thurn

(57) **Abstract**

Input light enters a variable optical attenuator 22 and each wavelength of the input light attenuates at the same attenuation factor. Although the attenuation factor of the variable optical attenuator 22 is constant to a wavelength, it is completely changeable by an electric signal from the outside of the case or a command signal from a terminal station. Output light of the variable optical attenuator 22 enters an optical amplifier 24 and optically amplified in there. Though output light of the optical amplifier 24 is mostly output toward the outside, a part of the output light is split by an optical splitter 26 and enters a photodetector 28. The photodetector 28 applies a signal indicating the input power to the optical amplifier 24. In the optical amplifier 24, its pumping power is feedback-controlled so that the output power of the optical amplifier 24 becomes constant according to the output of the photodetector 28.

## Description

### FIELD OF THE INVENTION

This invention relates to a gain equalizer with variable gain characteristics and an optical amplifying transmission line employing the gain equalizer.

### BACKGROUND OF THE INVENTION

In an optical amplifying transmission system, especially in an optical amplifying transmission system employing wavelength division multiplexing technology, a gain equalizer is generally disposed for compensating inconstancy of gain of an optical amplifier corresponding to a wavelength. Conventionally, having employed as the equalizer is a passive or fixed element comprising preset constant equalizing characteristics such as a fiber grating and an etalon filter.

Furthermore, to keep a gain band wider in the optical amplifying transmission line, a wavelength dependency of the gain of the system and equalizing characteristics of the gain equalizer should comprise identical forms as far as possible. Accordingly, plural kind of (fixed) gain equalizers having different equalizing characteristics have been widely used so as to cope with the complicated equalizing characteristics.

In a practical system, due to uneven product quality of each optical part composing the optical fiber and the optical amplifier, gain equalizing characteristics of the system sometimes deviate from desired characteristics. For compensating the deviation, several kinds of secondary gain equalizers should be provided in advance and then a specific secondary gain equalizer is selected and connected according to the gain equalizing characteristics obtained after the installation of the system.

Moreover, insertion loss of the optical fibers and the optical parts increases due to aged deterioration. The increase of the insertion loss gives an enormous influence upon the gain equalization of the system. That is, the gain equalizing characteristics which were excellent immediately after the installation of the transmission line deteriorates severely after several ten years. However, it is impossible to improve the deterioration of the gain equalizing characteristics using a passive (fixed) gain equalizer. Moreover, to control the deterioration of the gain equalizing characteristics, it is required to estimate the loss caused by the aged deterioration in the design stage. Therefore, the system design becomes extremely difficult.

In a submarine cable system, the difference between temperature at ground level and temperature at the bottom of the sea also causes the deterioration of the gain equalizing characteristics. Namely, the temperature difference must be considered in the system design stage. This makes the system design more difficult.

In the method to employ the plural kind of gain equalizers having different equalizing characteristics, the equalizing characteristics of each kind of the gain equalizers need to be defined. Consequently, the system design becomes even more complicated.

### SUMMARY OF THE INVENTION

An object of the present invention is to provide a gain equalizer and an optical amplifying transmission line for solving the foregoing inconveniences.

Another object of the present invention is to provide a gain equalizer and an optical amplifying transmission line capable of changing equalizing characteristics.

The gain equalizer according to the invention comprises a first level adjuster having a variable level adjusting amount which level is constant to a wavelength, and a second level adjuster having a level adjusting amount which inclination to the wavelength is variable. Therefore, when levels of the shorter wavelength side and the longer wavelength side differ, the level difference between the wavelengths can be solved without giving any serious change to the output power of the gain equalizer.

In the second level adjuster, the inclination of the level adjusting amount in relation to the wavelength is changeable from a plus to a minus, or vice versa so as to be applicable to whether a signal level is greater in shorter or longer wavelength.

Either of the first and second level adjusters can be installed the first.

The second level adjuster comprises an output power monitor for monitoring the output power of the gain equalizer, and an optical amplifier which pumping power is controlled to maintain the output power of the gain equalizer constantly according to the monitored results of the output power monitor. Consequently, the level adjusting amount, or gain of the optical amplifier can be automatically controlled by the level adjustment at the first level adjuster and thus the adjustment or setting of the gain equalizing amount becomes simpler.

For realizing the automated gain equalization, the gain equalizer further comprises a low-range optical power detector for detecting an optical power of a predetermined low wavelength range from the output power of the gain equalizer, a high-range optical power detector for detecting an optical power of a predetermined high wavelength range from the output power of the gain equalizer, and a controller for controlling the first and second level adjusters according to the detected results of the low-range and high-range optical power detectors. When the second level adjuster comprises an optical amplifier, the controller controls the second level adjuster to keep output power of the gain equalizer constantly according to the sum of the detected results of the low-range and high-range optical power detectors. The controller further controls the level-adjusting amount of the first level adjuster according to the difference between the respective detected results of the low-range and high-range optical power detectors.

The first level adjuster comprises for example a variable optical attenuator, and the second level adjuster comprises for example an optical amplifier.

An optical amplifying transmission line employing the foregoing gain equalizer can correspond to changes with time of the gain equalizing characteristics and the detailed design before the installation becomes unnecessary.

### BRIEF DESCRIPTION OF THE DRAWINGS

Fig. 1 shows a schematic block diagram of a first embodiment of an optical amplifying transmission line of the invention;
Fig. 2 shows a schematic block diagram of another embodiment of the optical amplifying transmission line of the invention;
Fig. 3 shows a schematic block diagram of a first embodiment of a gain equalizer 20;
Fig. 4 shows the characteristics of an optical amplifier 24;
Fig. 5 shows the variation of net gain of the gain equalizer 20 in relation to the wavelength;
Fig. 6 shows a schematic block diagram of a second embodiment of the optical amplifier 20;
Fig. 7 shows a schematic block diagram of a third embodiment of the optical amplifier 20; and
Fig. 8 shows a schematic block diagram of a fourth embodiment of the optical amplifier 20.

### DESCRIPTION OF THE PREFERRED EMBODIMENTS

Embodiments of the invention are explained below in detail with reference to the drawings.

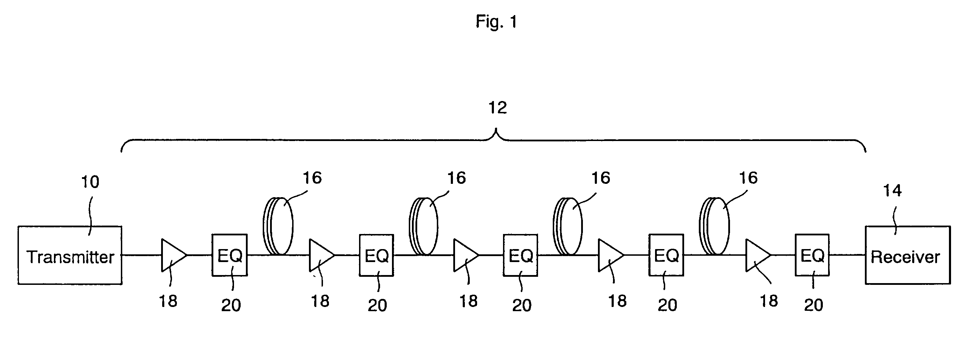

Fig. 1 shows a first schematic block diagram of the invention. An optical transmitter 10 outputs an optical signal toward an optical amplifying transmission line 12. The optical signal propagates on the optical amplifying transmission line 12 and inputs an optical receiver 14 to get a receiving process. The optical signal, as to be described later, is obtained by wavelength-division-multiplexing optical signals of a plurality of wavelengths. In the optical amplifying transmission line 12, the optical signal is propagated on a transmission optical fiber 16, and optically amplified by an optical amplifying repeater 18, and each difference of gain per wavelength is compensated by a gain equalizer. In the gain equalizer 20 of the embodiment, its equalizing characteristics are changeable even after the installation; a detailed description will be given later.

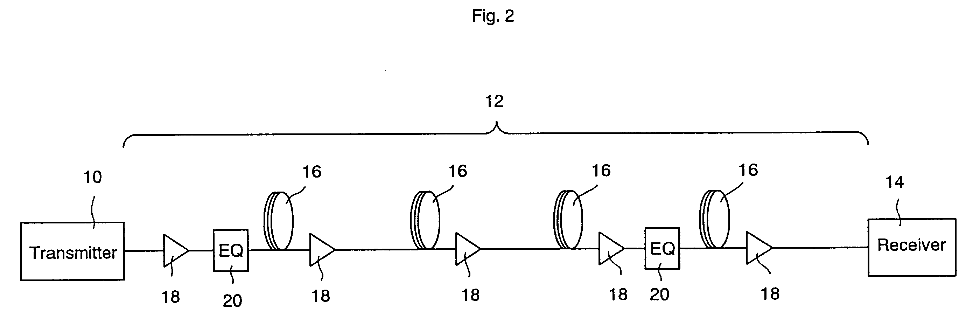

In Fig. 1, the gain equalizers 20 are disposed on the output side of the respective amplifying repeaters 18. However, it is also applicable to dispose the single gain equalizer 20 in every several optical amplifying repeaters 18 as shown in Fig. 2.

Since the gain equalizer 20 itself, as described later, has gain, it is also possible to connect the transmission optical fiber 16 between the optical amplifying repeater 18 and the gain equalizer 20. That is, the gain equalizer 20 also functions as the optical amplifying repeater 18.

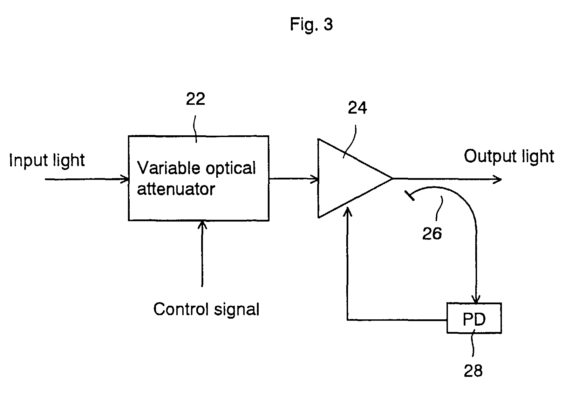

Fig. 3 shows a schematic block diagram of a first embodiment of a gain equalizer according to the invention. Input light enters a variable optical attenuator 22 and therein each wavelength of the input light attenuates at the same attenuation factor. The attenuation factor of the variable optical attenuation 22 is constant to the wavelength, and the factor is changeable with an electric signal from the outside of the case or a command signal from a terminal station. The variable optical attenuator 22 comprises for example an ND plate, which is available on the market, having different attenuation factors in azimuthal direction, the plate being rotatable at a desired angle using a motor.

Output light of the variable optical attenuator 22 enters an optical amplifier 24 and optically amplified there. The optical amplifier 24 comprises for example an erbium-doped optical amplifying fiber as an optical amplifying medium and thus its gain is not constant in relation to wavelength. Although most output light of the optical amplifier 24 is output toward the outside, a portion of the output light is split by an optical splitter 26 and enters a photodetector 28. The photodetector 28 applies a signal indicating the power of the input light to the optical amplifier 24. In the optical amplifier 24, pumping power of the optical amplifier 24 is feedback-controlled according to the output of the photodetector 28 so that the output power of the optical amplifier 24 becomes constant; namely, the output of the photodetector 28 equalizes to a constant desired value.

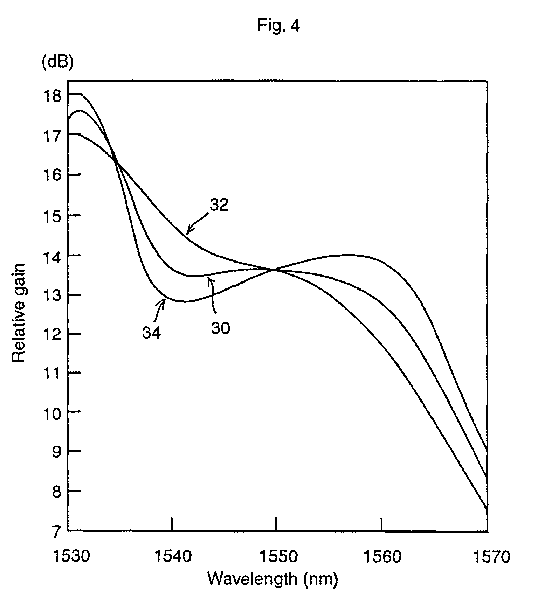

The wavelength characteristics of gain of the optical amplifier 24 depend on pumping power and input power. Fig. 4 shows a schematic diagram of wavelength characteristics of gain of the optical amplifier 24 when the pumping power is controlled so that the output power of the optical amplifier 24 becomes constant. The horizontal axis shows wavelengths and the vertical axis shows gain. In an optical communication system, especially in a long distance optical communication system employing a submarine optical cable, a signal wavelength belongs to a 1550 nm band. In general, the characteristics 30 are employed so that the gain becomes flat at its signal wavelength band. When the input power decreases, as shown for a characteristic curve 32, gain of a 1540 nm band increases relative to that of the 1550 band, and gain of a 1560 nm band decreases relative to that of the 1550 band. Conversely, when the input power is increased, as shown for a characteristic curve 34, the gain of the 1540 nm band decreases relative to that of the 1550 nm band and the gain of the 1560 nm band increases relative to that of the 1550 nm band. That is, the optical amplifier 24 has characteristics in which the inclination of the gain in relation to the wavelength changes from a minus quantity to a plus quantity in accordance with the input power. The differences among the respective characteristic curves 30, 32 and 34 are relative.

In the embodiment, the above-mentioned characteristics of the optical amplifier 24 are utilized. When the attenuation factor of the variable optical attenuator 22 is increased and the input power of the optical amplifier 24 is intentionally decreased, gain of a longer wavelength side decreases compared to that of a shorter wavelength. In reverse, the attenuation factor of the variable optical attenuator 22 is decreased and the input power of the optical amplifier 24 is intentionally increased, the gain of the longer wavelength side increases compared to that of the shorter wavelength side. Consequently, changing the attenuation factor of the variable optical attenuator 22 can control the wavelength dependence of the net gain of the gain equalizer shown in Fig. 3.

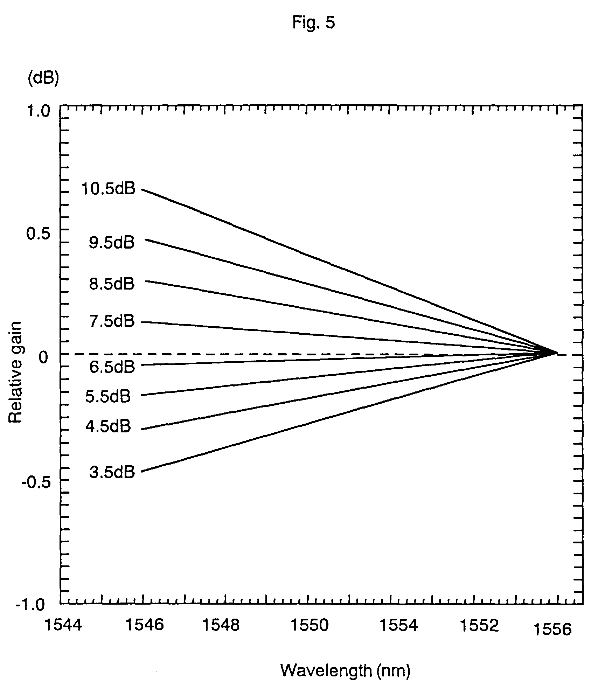

Fig. 5 shows gain wavelength characteristics of the embodiment shown in Fig. 3. The horizontal axis shows wavelengths and the vertical axis shows relative gains in relation to gain of a 1556 nm band. Under the condition that net gain of the embodiment shown in Fig. 3, or ratio of output power and input power of the embodiment shown in Fig. 3 is maintained constant, the attenuation factor of the variable optical attenuator 22 was changed and its characteristics were observed. The numeric values from 3.5 dB to 10.5 dB show the gain of the optical amplifier 24. It is understood from Fig. 5 that the inclination of the gain of the optical amplifier 24 in relation to the wavelength changes from a minus quantity to a plus quantity. Also, it is easier to use because the gain change in relation to the wavelength shows straight lines.

If the level of the shorter wavelength side is lower compared to that of the longer wavelength side, the attenuation factor of the variable optical attenuator 22 should be increased. On the other hand, if the level of the longer wavelength side is lower compared to that of the shorter wavelength side, the attenuation factor of the variable optical attenuator 22 should be decreased.

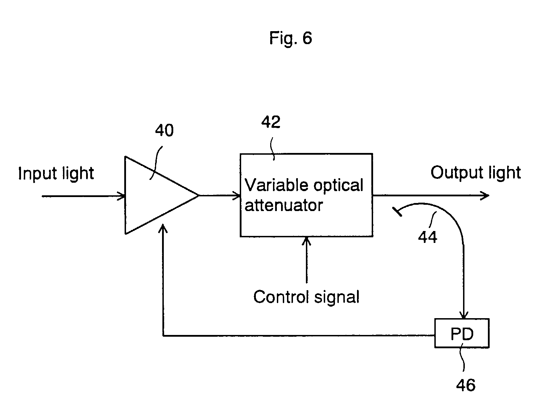

In the embodiment shown in Fig. 3, the variable optical attenuator 22 is disposed on an input stage of the optical amplifier 24. However, the variable optical attenuator also can be disposed between the optical amplifier and the optical splitter for monitoring the output power of the optical amplifier. Fig. 6 shows a schematic block diagram of the modified embodiment.

Input light enters an optical amplifier 40 and optically amplified there. Output light of the optical amplifier 40 enters a variable optical attenuator 42 and its respective wavelengths attenuate at the same attenuation factor. Although most output light of the variable optical attenuator 42 is output toward the outside, a portion of the output light is split by an optical splitter 44 and enters a photodetector 46. The photodetector 46 outputs an electric signal indicating the input optical power. The output of the photodetector 46 is applied to the optical amplifier 40 and the pumping power of the optical amplifier 40 is feedback-controlled so that the input power of the photodetector 46 is maintained at a constant desired value.

The embodiment shown in Fig. 6 operates in the same manner with the embodiment shown in Fig. 3. Namely, in this embodiment, an inclination of the net gain to the wavelength also can be controlled either to be plus or minus and the gain equalizing amount can be changed from the outside even after the installation by controlling the attenuation amount of the variable optical attenuator 42 from the outside. For example, when the attenuation amount of the variable optical attenuator 42 is increased, the input light intensity of the photodetector 46 is decreased and the pumping power of the optical amplifier 40 is increased. When the pumping power is increased, the gain wavelength characteristics of the optical amplifier 40 shifts from the characteristics 30 to the characteristics 32 in Fig. 4 and the gain of the shorter wavelength side becomes higher that that of the longer wavelength side. Conversely, when the attenuation amount of the variable optical attenuator 42 is decreased, the input optical intensity of the photodetector 46 is increased and the pumping power is decreased in the optical amplifier 40. When the pumping power is decreased, the gain wavelength characteristics of the optical amplifier 40 shifts from the characteristics 30 to the characteristics 34 in Fig. 4 and the gain of the shorter wavelength side becomes lower than that of the longer wavelength side. Thus, the gain equalizing characteristics can be perfectly controlled.

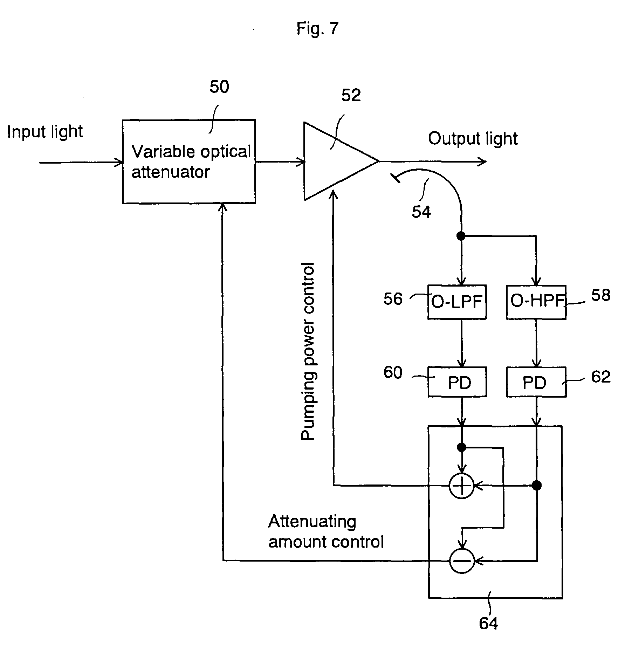

Fig. 7 shows a schematic block diagram of an embodiment in which the attenuation amount of the variable optical attenuator is automatically controlled so that the levels of the respective wavelengths become equivalent one another.

Input light enters a variable optical attenuator 50 and its each wavelength attenuates at the same attenuation factor. Though the attenuation factor of the variable optical attenuator 50, similarly to the variable optical attenuator 22, is constant to the wavelength, the attenuation factor can be changed freely with an electric signal from the outside or a command signal.

Output light of the variable optical attenuator 50 enters an optical amplifier, which is the same with the optical amplifier 24, and optically amplified there. Although output light from the optical amplifier 52 is mostly output toward the outside, a portion of the output light is split by an optical splitter 54. Output light from the optical splitter 54 is applied to an optical low-pass filter (LPF) 56 and an optical high-pass filter (HPF) 58. The optical LPF 56 extracts the lights (such as λ1) that belongs to the shorter wavelength side from the signal wavelengths λ1∼λn (on condition that λ1<λn). On the other hand, the optical HPF 58 extracts the lights (such as λn) that belongs to the longer wavelength side from the signal wavelengths λ1∼λn. A photodetector 60 converts output light from the optical LPF 56 to an electric signal and a photodetector 62 converts output light from the optical HPF 58 into an electric signal. Output of the photodetector 60 indicates the intensity of the light (such as λ1) that belongs to the shorter wavelength side in the signal wavelengths λ1∼λn, and output of the photodetector 62 indicates the light (such as λn) that belongs to the longer wavelength side in the signal wavelengths λ1∼λn.

The outputs from the photodetectors 60 and 62 are applied to an operation control circuit 64. The operation control circuit 64 operates the sum and the difference of the outputs of the photodetectors 60 and 62. As the sum of the outputs of the photodetectors 60 and 62 represents the output power of the optical amplifier 52, the operation control circuit 64 applies the sum of the outputs of the photodetectors 60 and 62 to the optical amplifier 52, and the optical amplifier 52 controls its pumping power so that the output power of the optical amplifier 52 becomes constant. Furthermore, a higher level between the longer wavelength side and the shorter wavelength side is clearly determined from the difference of the outputs of the photodetectors 60 and 62. Therefore, to decrease or to increase the attenuation amount of the variable optical attenuator 50 is easily determined. That is, the operation control circuit 64 applies the difference of the outputs of the photodetectors 60 and 62 into the variable optical attenuator 50 as an attenuation factor control signal. According to the control signal from the operation control circuit 64, the variable optical attenuator 50 increases the attenuation factor when the level of the longer wavelength side is higher and decreases the attenuation factor when the level of the shorter wavelength side is higher.

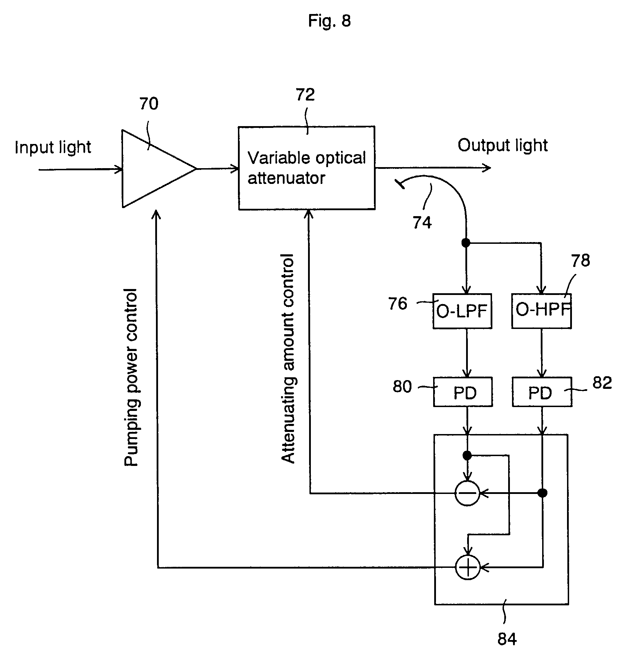

As the embodiment shown in Fig. 3 could be modified to the embodiment shown in Fig. 6, the embodiment shown in Fig. 7 also can be modified to an embodiment shown in Fig. 8.

Input light enters an optical amplifier 70 and optically amplified there. Similarly to the optical amplifier 52, gains of the respective wavelengths of the optical amplifier 70 are sometimes almost equivalent and sometimes different one another. Output light from the optical amplifier 70 enters a variable optical attenuator 72 and its each wavelength attenuates at the same attenuation factor. The attenuation factor of the variable optical attenuator 72, similarly to the variable optical attenuators 22, 42 and 50, is constant to the wavelength and changeable with an electric signal from the outside or a command signal.

Although output light from the variable optical attenuator 72 is mostly output toward the outside, a portion of the output light is split in an optical splitter 74. Output light of the optical splitter 74 is applied to an optical low-pass filter (LPF) 76 and an optical high-pass filter (HPF) 78. The optical LPF 76, similarly to the optical LPF 56, extracts the lights (such as λ1) of the shorter wavelength side from the signal wavelengths λ1∼λn, and the optical HPF 78, similarly to the optical HPF 58, extracts the light (such as λn) of the longer wavelength side from the signal wavelength λ1∼λn. A photodetector 80 converts output light of the optical LPF 76 into an electric signal, and a photodetector 82 converts output light of the optical HPF 78 into an electric signal. Output of the photodetector 80, similarly to that of the photodetector 60, indicates the intensity of the light (such as λ1) at the shorter wavelength side in the signal wavelengths λ1∼λn, and output of the photodetector 82, similarly to that of the photodetector 62, indicates the intensity of the light (such as λn) of the longer wavelength side in the signal wavelengths λ1∼λn.

The outputs of the photodetectors 80 and 82 are applied to an operation control circuit 84. The operation control circuit 84, similarly to the operation control circuit 64, operates the sum and the difference of the outputs of the photodetectors 80 and 82 and applies a sum signal to the optical amplifier 70 and a difference signal to the variable optical attenuator 72. The optical amplifier 70 controls its pumping power so that the output power of the optical amplifier 70 becomes constant according to the sum signal from the operation control circuit 84. The variable optical attenuator 72 increases the attenuation factor when the level of the longer wavelength side is higher and decreases it when the level of the shorter wavelength side is higher, according to the difference signal from the operation control circuit 84.

In the embodiments shown in Figs. 7 and 8, the optical intensity of the single wavelength on both sides of the signal wavelength band is detected, and the pumping power of the optical amplifiers 52, 70 and the attenuation factor of the variable optical attenuators 50, 72 are controlled by using the sum and the difference of the obtained results. It is also applicable to detect the optical intensity of several wavelengths and to control the pumping power of the respective optical amplifiers 52, 70 and the attenuation factors of the variable optical attenuators 50 and 72 using the sum and the difference of the obtained results.

In the respective foregoing embodiments, the optical amplifiers 24, 42, 52 and 70 are used as the elements for changing the inclination of the gain-to-wavelength from a plus to a minus or vice versa according to the input power. However, it is needless to say that the elements can be optical attenuators in which the inclination of the attenuation factor to the wavelength can be changed from a plus (or a minus) to a minus (or a plus) according to the input power. In short, any element can be used instead of the optical amplifiers 24, 42, 52 and 70 as far as its inclination of a signal level to a wavelength can be changed from a plus (or a minus) to a minus (or a plus).

Instead of the variable optical attenuators 22, 42, 50 and 72, any element capable of equally adjusting its level to a wavelength can be used.

As readily understandable from the foregoing description, according to the invention, design of a gain equalizer becomes extremely easier since there is no or less need to consider several factors such as an increase of loss of an optical fiber and difference of temperature at a design process. A deterioration of gain equalizing characteristics after the installation due to a increase of loss and the like can be remotely or automatically improved and therefore the gain equalizing characteristics can be excellently maintained over a long period of time. In a design process, it is unnecessary to strictly adjust the equalizing characteristics of the gain equalizer and to use a plurality of the gain equalizers. It is no longer necessary to prepare several kinds of secondary gain equalizers for compensating gaps in gain equalizing characteristics due to the uneven quality of the optical part products.

While the invention has been described with reference to the specific embodiment, it will be apparent to those skilled in the art that various changes and modifications can be made to the specific embodiment without departing from the spirit and scope of the invention as defined in the claims.

## Claims

1. A gain equalizer comprising:
a first level adjuster having a variable level adjusting amount to be constant toward a wavelength; and
a second level adjuster having a level adjusting amount in which its inclination toward the wavelength is variable.

2. The gain equalizer of the claim 1 wherein the second level adjuster can vary the inclination of the level adjusting amount to the wavelength from one side of a plus and a minus to the other side.

3. The gain equalizer of claim 1 or 2 wherein one output of the first level adjuster and the second level adjuster enters the other.

4. The gain equalizer of claim 1, 2 or 3 wherein the second level adjuster comprises an output power monitor for monitoring output power of the gain equalizer and an optical amplifier which pumping power is controlled to maintain the output power of the gain equalizer constant according to a monitoring result of the output power monitor.

5. The gain equalizer of anyone of the foregoing claims further comprising a low-range optical power detector for detecting an optical power of a predetermined low wavelength range from the output light of the gain equalizer, high-range optical power detector for detecting an optical power of a predetermined high wavelength range from the output light of the gain equalizer, and a controller for controlling the first level adjuster and the second level adjuster according to respective detected results of the low-range optical power detector and the high-range optical power detector.

6. The gain equalizer of claim 5 wherein the second level adjuster comprises an optical amplifier and the controller controls the second level adjuster so as to keep the output power of the gain equalizer constant according to the sum of both detected results of the low-range optical power detector and the high-range optical power detector.

7. The gain equalizer of claim 5 or 6 wherein the controller controls the level adjusting amount of the first level adjuster according to the difference between the respective detected results of the low-range optical power detector and the high-range optical power detector.

8. The gain equalizer of anyone of the foregoing claims wherein the first level adjuster comprises a variable optical attenuator.

9. The gain equalizer of anyone of the foregoing claims wherein the second level adjuster comprises an optical amplifier.

10. An optical transmission line comprising a gain equalizer according to any one of claims 1 through 9.
